# EUROPÄISCHE PATENTSCHRIFT

(11) **EP 2 789 996 B1**
(45) Veröffentlichungstag und Bekanntmachung des Hinweises auf die Patenterteilung: **14.08.2019**
(21) Anmeldenummer: 13163150.9
(22) Anmeldetag: 10.04.2013
(51) Int. Cl.: G01F 23/28

(54) **ECHOKURVENBESTIMMUNG MIT BEREICHSWEISE UNTERSCHIEDLICHER AUFLÖSUNG**
ECHO CURVE DETERMINATION WITH DIFFERENT RESOLUTION IN DIFFERENT AREAS
DÉTERMINATION DE COURBE D'ÉCHOS AVEC RÉSOLUTION DIFFÉRENTE SELON LA ZONE

(43) Veröffentlichungstag der Anmeldung: 15.10.2014
(73) Patentinhaber: VEGA Grieshaber KG, 77709 Wolfach (DE)
(72) Erfinder: Welle, Roland, 77756 Hausach (DE); Griessbaum, Karl, 77796 Mühlenbach (DE); Fischer, Michael, 72275 Alpirsbach (DE)
(74) Vertreter: Maiwald Patent- und Rechtsanwaltsgesellschaft mbH

(56) Entgegenhaltungen:
- EP-A1- 0 676 649
- EP-A1- 2 116 819
- EP-A1- 2 226 615
- EP-A2- 1 933 117

## Beschreibung

### Gebiet der Erfindung

Die Erfindung betrifft die Bestimmung von Echokurven. Insbesondere betrifft die Erfindung ein Verfahren zum Bestimmen einer Echokurve durch ein nach einem Entfernungsmessverfahren arbeitendes Füllstandmessgerät, welches im Rahmen der Füllstandbestimmung eine Spektralanalyse des von ihm empfangenen Messsignals durchführt, ein hochauflösendes Füllstandmessgerät, ein Programmelement und ein computerlesbares Medium.

### Hintergrund

Die Füllstandmessgeräte, von denen die Erfindung ausgeht, arbeiten nach einem Entfernungsmessverfahren, bei welchem eine Spektralanalyse des empfangenen Messsignals durchgeführt wird.

Beispielsweise kann es sich hierbei um Füllstandmessgeräte handeln, welche nach dem FMCW- Prinzip (FMCW: Frequency Modulated Continuous Wave) arbeiten. Andere geeignete Füllstandmessgeräte arbeiten nach dem SFCW-Prinzip (SFCW: Stepped Frequency Continuous Wave) oder anderen Entfernungsmessverfahren, welche im Rahmen der Signalauswertung eine Spektralanalyse benötigen.

Insbesondere kommen Füllstandmessgeräte in Betracht, die nach dem Prinzip des freistrahlenden Radars, dem Prinzip der geführten Mikrowellen, einem Ultraschallmessverfahren oder auch mit Hilfe eines Laserstrahls arbeiten. Solche Füllstandmessgeräte können beispielsweise an eine 4...20mA Versorgung angeschlossen sein.

Die Füllstandmessgeräte strahlen ein Sendesignal in Richtung der Füllgutoberfläche ab. Dieses Signal wird dann von der Füllgutoberfläche und ggf. vom Behälterboden, einer Trennschicht zwischen verschiedenen Füllmedien oder von Störstellen im Behälter reflektiert und von dem Füllstandmessgerät aufgenommen.

Das reflektierte, aufgenommene Sendesignal (im Folgenden auch Empfangssignal oder Messsignal genannt) wird dann einer Signalverarbeitung unterworfen, bei welcher aus diesem Signal der Füllstand bestimmt wird.

Während dieser Signalverarbeitung kann ein Abtasten des in der Regel wellenförmigen Empfangssignals erfolgen und aus den Abtastwerten kann dann die sog. Hüllkurve, im Folgenden auch Echokurve genannt, berechnet werden. Diese Hüllkurve oder Echokurve kann dann weiter ausgewertet werden.

So ist es beispielsweise möglich, in der Echokurve ein lokales Maximum (im Folgenden Echo genannt) zu identifizieren und dieses Echo als den an der Füllgutoberfläche reflektierten Signalanteil des Sendesignals zu identifizieren. In diesem Fall entspricht also die Lage dieses Echos in der Echokurve der tatsächlichen, örtlichen Lage der Füllgutoberfläche im Behälter.

EP 2 116 819 A1 beschreibt ein Pulsradar. Die Lehre gilt auch für FMCW Radare. Zunächst wird im Rahmen einer ersten Messung die Lage des Füllstandechos bestimmt, woraufhin in diesem Bereich ein Fenster gesetzt wird. Ist die ungefähre Lage des Füllstandechos bekannt, können die Messdaten einer zukünftigen Messung innerhalb dieses Fensters mit hoher Auflösung erfasst und ausgewertet werden.

EP 0 676 649 A1 beschreibt ein Verfahren zur Distanzmessung, welches eine Serie nicht modulierter Hyperfrequenzsignale mit diskreten Pulsen verwendet, die in einem bestimmten Frequenzband verteilt sind. Die reflektierten Empfangssignale werden demoduliert, und zwar unter Verwendung einer inversen Fouriertransformation, um auf diese Weise eine Grobbestimmung der Füllgutoberfläche zu ermöglichen. Danach wird ein hochauflösendes MUSIC-Verfahren eingesetzt, um das Füllgutecho mit höherer Auflösung zu lokalisieren.

### Zusammenfassung der Erfindung

Es ist eine Aufgabe der vorliegenden Erfindung, eine Hüllkurvenberechnung durch ein nach einem Entfernungsmessverfahren arbeitendes Füllstandmessgerät, welches im Rahmen der Füllstandbestimmung eine Spektralanalyse des von ihm empfangenen Messsignals durchführt, anzugeben, welche eine möglichst genaue Bestimmung des Füllstands unter möglichst geringem Aufwand ermöglicht.

Diese Aufgabe wird durch die Merkmale der unabhängigen Patentansprüche gelöst. Weiterbildungen der Erfindung ergeben sich aus den Unteransprüchen und der folgenden Beschreibung.

Gemäß einem ersten Aspekt der Erfindung ist ein Verfahren zum Bestimmen einer Echokurve durch ein nach einem Entfernungsmessverfahren arbeitendes Füllstandmessgerät, welches im Rahmen der Füllstandbestimmung eine Spektralanalyse des von ihm empfangenen Messsignals durchführt, angegeben. Bei dem Verfahren wird zunächst ein Messsignal erfasst, bei dem es sich um ein von dem Füllstandmessgerät ausgesendetes und zumindest an der Oberfläche eines Mediums (also insbesondere an der Füllgutoberfläche) reflektiertes Sendesignal handelt. Daraufhin wird das erfasste Sendesignal in ein Zwischenfrequenzsignal umgesetzt, welches zu diskreten Zeitpunkten abgetastet wird. Die durch das Abtasten des Zwischenfrequenzsignals erhaltenen Abtastwerte werden, ggf. nach einer Digitalisierung, vom Zeitbereich in den Frequenzbereich überführt. Durch die in den Frequenzbereich überführten Abtastwerte wird dann eine Echokurve in einer ersten Auflösung gebildet. Daraufhin oder gleichzeitig erfolgt die Berechnung eines Abschnittes der Echokurve, der innerhalb eines definierten Bereiches der Echokurve liegt, in einer zweiten Auflösung, die höher ist als die erste Auflösung.

In anderen Worten werden unterschiedliche Abschnitte der Echokurve mit unterschiedlichen Auflösungen berechnet. Auf diese Weise ist es möglich, dass bewusst derjenige Abschnitt der Echokurve mit höherer Auflösung berechnet wird, der von gesteigertem Interesse ist. Beispielsweise kann es sich hierbei um denjenigen Bereich handeln, der das Füllgutecho umfasst.

Auch ist es möglich, dass mehrere Abschnitte der Echokurve mit höherer Auflösung berechnet werden, beispielsweise alle diejenigen Abschnitte, welche ein Echo aufweisen. An dieser Stelle sei daraufhingewiesen, dass die Echokurve grundsätzlich mehrere Echos aufweisen kann, von denen jedoch nur eines auf eine direkte Reflexion des Sendesignals an der Füllgutoberfläche zurückzuführen ist. Bei den anderen Echos kann es sich beispielsweise um Echos handeln, die auf Mehrfachreflexionen zurückzuführen sind, oder auf Reflexionen an Behältereinbauten, am Behälterboden, an einer Trennschicht oder Störstellen.

Die Bereiche der Echokurve, in denen die Echokurvenabschnitte mit höherer Auflösung berechnet werden sollen, können gemäß einer Ausführungsform der Erfindung von dem Füllstandmessgerät automatisch identifiziert und festgelegt werden. So kann das Füllstandmessgerät durch Analyse der zunächst grob aufgelösten Echokurve feststellen, wo lokale Maxima liegen und eines oder mehrere dieser Maxima auswählen, um um dieses Maximum herum einen Abschnitt der Echokurve mit höherer Auflösung zu berechnen. Die Länge dieses Abschnittes kann ebenfalls automatisch bestimmt werden.

Auch kann vorgesehen sein, dass ein Benutzer den definierten Bereich der Echokurve, in dem der Abschnitt liegt, der mit höherer Auflösung berechnet werden soll, selber festlegen kann. Insbesondere kann vorgesehen sei, dass der Benutzer festlegt, wie viele Abschnitte der Echokurve mit höherer Auflösung berechnet werden sollen. Beispielsweise kann vorgesehen sein, dass der Benutzer vorgibt, dass er sich ausschließlich für das Füllstandecho und das Echo des Behälterbodens interessiert. Diese beiden Echos werden dann in der grob aufgelösten Echokurve identifiziert und im Folgenden Schritt werden dann die beiden Echokurvenabschnitte, in denen diese zwei Echos liegen, mit höherer Auflösung berechnet.

Die grob aufgelöste Echokurve kann beispielsweise mit der Unterstützung eines digitalen Signalprozessors des Füllstandmessgeräts berechnet werden. Der Abschnitt der Echokurve innerhalb des definierten Bereiches der Echokurve kann in einer sehr fein gerasterten Auflösung berechnet werden.

Gemäß einer Ausführungsform der Erfindung handelt es sich bei dem Sendesignal um ein frequenzmoduliertes, elektromagnetisches oder optisches Signal.

Gemäß einer weiteren Ausführungsform der Erfindung arbeitet das Füllstandmessgerät nach dem FMCW-Prinzip. Auch kann es ausgeführt sein, nach dem SFCW-Prinzip zu arbeiten.

Erfindungsgemäß erfolgt das Berechnen des Abschnitts der Echokurve, der sich innerhalb des definierten Bereichs der Echokurve befindet, in der zweiten erhöhten Auflösung unter Verwendung einer diskreten Fouriertransformation (Discrete Time Fourier Transformation, DTFT).

Die Fouriertransformation für zeitdiskrete Signale (DTFT) bildet ein endliches, zeitdiskretes Signal auf ein (theoretisch) kontinuierliches Frequenzspektrum ab. Die Berechnungsvorschrift erlaubt daher, unter Verwendung der durch Abtastung gewonnenen digitalen Stützstellen des Zwischenfrequenzsignals den Wert einer beliebig vorgebbaren Frequenz im kontinuierlichen Frequenzspektrum zu ermitteln. Durch wiederholte Ausführung der Berechnungsvorschrift können daher eine Vielzahl von Stützstellen im Frequenzbereich ermittelt werden, welche insbesondere auch eine beliebig kleine Frequenzdifferenz zu den Nachbarstützstellen aufweisen. Auf diese Art kann im Frequenzbereich ein Echokurvenabschnitt mit einer sehr feinen Auflösung ermittelt werden.

Gemäß einem weiteren Aspekt der Erfindung erfolgt das Berechnen des Abschnitts der Echokurve, der innerhalb des definierten Bereichs liegt, durch Berechnen weiterer Stützstellen der Echokurve in dem definierten Bereich.

Diese weiteren Stützstellen weisen beispielsweise jeweils einen vorgegebenen Frequenzabstand von Δf zu den ihnen benachbarten Stützstellen auf. Auch kann vorgesehen sein, dass der Frequenzabstand der Stützstellen zueinander entlang des Abschnitts variiert, beispielsweise in der Mitte des Abschnitts kleiner ist als in dessen Randbereichen.

Gemäß einer weiteren Ausführungsform der Erfindung entspricht der definierte Bereich der Echokurve der Lage eines mit der Oberfläche des Mediums korrespondierenden Echos, insbesondere dem Füllstandecho, welches der Lage der Füllgutoberfläche entspricht.

Gemäß einer weiteren Ausführungsform der Erfindung weist der definierte Bereich genau drei Abtastwerte auf, wobei der mittlere der drei Abtastwerte eine größere Amplitude aufweist, als die beiden anderen Abtastwerte.

Auch kann der definierte Bereich vier, fünf oder mehr Abtastwerte aufweisen, je nachdem, wie breit er sein soll.

Die Anzahl der Abtastwerte, die zu dem definierten Bereich gehören, kann sich beispielsweise danach richten, wie groß deren Amplituden im Verhältnis zu den Amplituden von Abtastwerten anderer Bereiche der Echokurve sind. Beispielsweise ist es möglich, dass ein breites Echo, welches eine Ausdehnung über mehr als drei Abtastwerte aufweist, auch über einen größeren Bereich hochauflösend berechnet wird, wohingegen ein schmales Echo dazu führt, dass der definierte Bereich schmaler ausfällt.

Erfindungsgemäß erfolgt das Berechnen der Echokurve aus den im Zeitbereich ermittelten Abtastwerten in der ersten Auflösung unter Verwendung einer schnellen Fouriertransformation.

Gemäß einem weiteren Aspekt der Erfindung ist ein hochauflösendes Füllstandmessgerät angegeben, das nach einem Entfernungsmessverfahren arbeitet, welches im Rahmen der Füllstandbestimmung eine Spektralanalyse des Messsignals durchführt. Das hochauflösende Füllstandmessgerät weist eine Antenne zum Erfassen eines von dem Füllstandmessgerät ausgesendeten und zumindest an der Oberfläche eines Mediums reflektierten Sendesignals (Messsignals) auf. Weiter ist eine Hochfrequenzeinheit zum Umsetzen des erfassten Sendesignals in ein Zwischenfrequenzsignal sowie eine Abtasteinheit zum Abtasten des Zwischenfrequenzsignals zu diskreten Zeitpunkten vorgesehen.

Darüber hinaus weist das Füllstandmessgerät eine Echokurvenerzeugungseinheit auf, welche die durch das Abtasten erhaltenen Abtastwerte vom Zeitbereich in den Frequenzbereich überführen kann und eine Echokurve aus den in den Frequenzbereich überführten Abtastwerten in einer ersten Auflösung sowie einen Abschnitt der Echokurve innerhalb eines definierten Bereiches der Echokurve in einer zweiten Auflösung, die höher ist als die erste Auflösung, berechnen kann.

Bei dem hochauflösenden Füllstandmessgerät kann es sich insbesondere um ein Füllstandmessgerät handeln, das nach dem FMCW-Prinzip arbeitet. Insbesondere kann das Füllstandmessgerät zur Ausführung eines oben und im Folgenden beschriebenen Verfahrens ausgeführt sein.

Gemäß einem weiteren Aspekt der Erfindung ist ein Programmelement angegeben, das, wenn es auf einem Prozessor eines Füllstandmessgeräts ausgeführt wird, den Prozessor veranlasst, das oben und im Folgenden beschriebene Verfahren durchzuführen.

Gemäß einem weiteren Aspekt der Erfindung ist ein computerlesbares Medium angegeben, auf dem ein Programmelement gespeichert ist, das, wenn es auf dem Prozessor eines Füllstandmessgeräts ausgeführt wird, das Füllstandmessgerät veranlasst, das oben und im Folgenden beschriebene Verfahren durchzuführen.

Das Programmelement kann Teil einer Software sein, die auf einem Prozessor eines Füllstandmessgeräts gespeichert ist. Der Prozessor kann dabei ebenso Gegenstand der Erfindung sein. Weiterhin umfasst die Erfindung ein Programmelement, welches schon von Anfang an die Erfindung verwendet, sowie auch ein Programmelement, welches durch eine Aktualisierung (Update) ein bestehendes Programmelement zur Verwendung der Erfindung veranlasst.

Im Folgenden werden mit Verweis auf die Figuren Ausführungsbeispiele der Erfindung beschrieben.

### Kurze Beschreibung der Figuren

Fig. 1 zeigt ein in einem Behälter eingebautes Füllstandmessgerät.
Fig. 2A zeigt ein Zwischenfrequenzsignal (Beatsignal) im Zeitbereich, welches auf ein von einem Füllstandmessgerät empfangenes, reflektiertes Sendesignal zurückzuführen ist.
Fig. 2B zeigt das Zwischenfrequenzsignal der Fig. 2A nach dessen Umsetzung in den Frequenzbereich.
Fig. 3A zeigt die Abtastung eines Zwischenfrequenzsignals im Zeitbereich.
Fig. 3B zeigt das Signal der Fig. 3A nach dessen Umsetzung in den Frequenzbereich.
Fig. 4 zeigt ein Füllstandmessgerät gemäß einem Ausführungsbeispiel der Erfindung.
Fig. 5 zeigt ein Flussdiagramm eines Verfahrens gemäß einem Ausführungsbeispiel der Erfindung.
Fig. 6 zeigt Abtastwerte einer Echokurve im Frequenzbereich.
Fig. 7 zeigt die Berechnung weiterer Stützstellen der Echokurve der Fig. 6 innerhalb eines definierten Bereiches der Echokurve gemäß einem Ausführungsbeispiel der Erfindung.

### Detaillierte Beschreibung von Ausführungsbeispielen

Die Darstellungen in den Figuren sind schematisch und nicht maßstäblich. Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

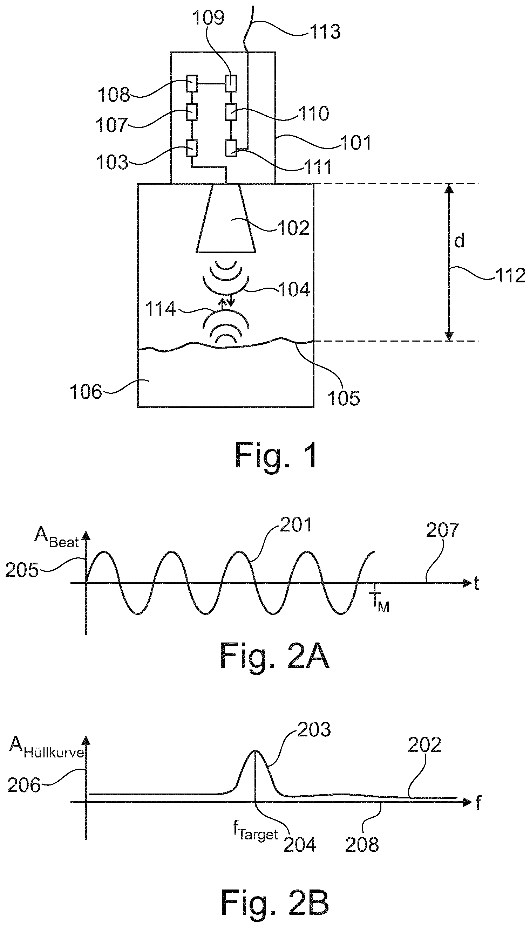

Fig. 1 zeigt ein Füllstandmessgerät 101 in Form eines Füllstandradars, welches in bzw. auf einem Behälter installiert ist.

An dieser Stelle sei daraufhingewiesen, dass das im Folgenden beschriebene Verfahren auch von anderen Füllstandmessgeräten ausgeführt werden kann, welche sich im Rahmen der Signalauswertung einer Spektralanalyse bedienen, wie Füllstandmessgeräte, die auf dem Prinzip der geführten Mikrowellen arbeiten, Ultraschallmessgeräte oder Lasermessgeräte.

Das Füllstandmessgerät der Fig. 1 ist beispielsweise ein FMCW-Radargerät. Besondere Bedeutung erlangt das FMCW-Füllstandmessverfahren aufgrund der nun verfügbaren integrierten Hochfrequenzkomponenten bei Füllstandmessungen im W-Band (75 GHz bis 110 GHz). Es kann aber auch in allen anderen Frequenzbändern eingesetzt werden.

Das Füllstandmessgerät 101 strahlt über die Antenne 102 ein von der Hochfrequenzeinheit 103 erzeugtes und in seiner Frequenz moduliertes Sendesignal 104 in Richtung einer Füllgutoberfläche 105 ab. Das Sendesignal wird an der Oberfläche 105 des Mediums 106 reflektiert und breitet sich daraufhin in Richtung des Füllstandmessgeräts 101 aus, wo es von der Antenne 102 wieder empfangen und an die Hochfrequenzeinheit 103 weitergeleitet wird.

In der Hochfrequenzeinheit 103 wird das empfangene Signal unter Verwendung des aktuell gesendeten Signals in ein Zwischenfrequenzsignal umgesetzt, welches im Wesentlichen nur noch niederfrequente Signalanteile aufweist.

Fig. 2A zeigt beispielhaft ein von dem Füllstandmessgerät 101 aus dem empfangenen, reflektierten Sendesignal (Messsignal) und dem gesendeten Sendesignal erzeugtes Zwischenfrequenzsignal oder Beatsignal 201, dessen Amplitude 205 in Abhängigkeit seiner Signallaufzeit t 207 abgebildet ist.

Das Zwischenfrequenzsignal 201 wird während eines Messzyklus der Länge T_{M} fortlaufend von der Hochfrequenzeinheit 103 (vgl. Fig. 1) bereitgestellt.

Ein mit der Hochfrequenzeinheit 103 verbundener Analog-Digital-Umsetzer 107 tastet während eines Messzyklus das bereitgestellte Zwischenfrequenzsignal 201 ab und speichert die sich daraus ergebenden digitalisierten Amplitudenwerte des Zwischenfrequenzsignals 201 in einem hier nicht dargestellten, aber im Füllstandmessgerät 101 enthaltenen Speicher.

Nach Abschluss des eigentlichen Messzyklus berechnet eine Echokurvenerzeugungseinheit 108 aus den abgelegten Amplitudenwerten des Zwischenfrequenzsignals eine Echokurve, wobei in diesem Schritt verfahrensbedingt eine Überführung des Zwischenfrequenzsignals vom Zeitbereich in den Frequenzbereich zweckmäßig sein kann.

Der Kurvenzug 202 in Fig. 2B zeigt das Ergebnis dieser Umsetzung des Zwischenfrequenzsignals 201 in den Frequenzbereich. Hier ist die Amplitude 206 des Signals 202 in Abhängigkeit von der Frequenz f 208 aufgetragen.

Die so gewonnene Echokurve 202 wird in einem weiteren Schritt an eine Auswerteeinheit 109 (vgl. Fig. 1) weitergeleitet, welche nach bekannten Verfahren dasjenige Echo 203, welches mit hoher Wahrscheinlichkeit mit der Reflexion an der Füllgutoberfläche 105 korrespondiert identifiziert und an eine Vermessungseinheit 110 übergibt.

Die Vermessungseinheit 110 bestimmt unter Verwendung der groben Frequenzlage des Nutzechos 203 und der Echokurve 202 die exakte Frequenz, welche dem Echopuls 203 zugeordnet werden kann. In diesem Schritt kommen wiederum bekannte Verfahren zum Einsatz. Zum einen kann die Position des Maximums des Echopulses 203 bestimmt werden (f_{Target} 204). Weiterhin mag es auch möglich sein, einen anderen Vermessungspunkt zu wählen, beispielsweise der Punkt der aufsteigenden Echoflanke, welcher gerade eine Amplitudendifferenz von -3 dB zum Maximum des Echopulses 203 aufweist.

Der so ermittelte Frequenzwert 204 kann mit Hilfe bekannter Gleichungen in einen Entfernungswert 112 überführt werden.

Dieser Entfernungswert d wird in einer Ausgabeeinheit 111 des Füllstandmessgeräts 101 ggf. noch linearisiert und skaliert und anschließend in digitaler Form über eine HART Leitung, einen Profibus, einen Foundation Fieldbus (FF), das Ethernet, eine USB-Schnittstelle und/oder auch in analoger Form über eine 4...mA Schleife an einer geeigneten Schnittstelle 113 nach außen hin bereitgestellt.

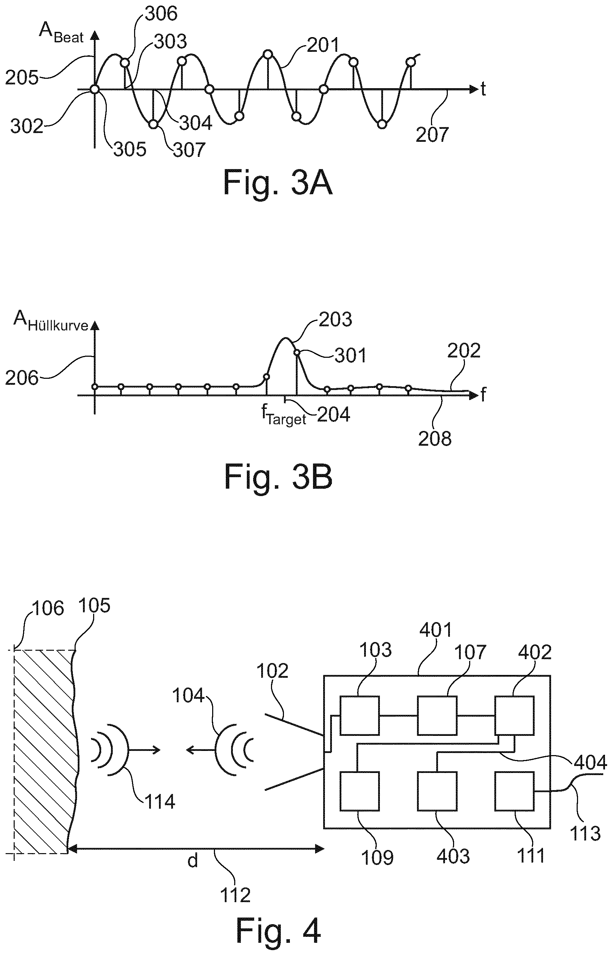

Das in Fig. 2B dargestellte Verhältnis zeigt ein Idealbild, welches bei einer digitalen Aufbereitung der Signale nur näherungsweise erreicht werden kann. Fig. 3A verdeutlicht die Probleme bei der digitalen Signalverarbeitung.

Das von der Hochfrequenzeinheit 103 bereitgestellte, zeitkontinuierliche Beatsignal 201 der Länge T_{M} wird wegen der Abtastungen im Analog-Digital-Umsetzer 107 nur zu bestimmten Zeitpunkten 302, 303, 304, etc. erfasst.

Die dabei ermittelten Werte sind in Fig. 3A durch entsprechende Kreise 305, 306, 307, etc. markiert.

Die Umsetzung dieser Werte in den Frequenzbereich erfolgt beispielsweise unter Verwendung einer schnellen Fouriertransformation (FFT). Die daraus ermittelten Werte sind in Fig. 3B dargestellt.

Die errechneten Werte haben einen Frequenzabstand von 1/T_{M}. Das frequenzkontinuierliche Spektrum 202 des Beatsignals 201 wird durch die schnelle Fouriertransformation nur für einzelne Frequenzwerte berechnet (siehe die Kreis-Markierungen in Fig. 3B).

Bei der Abarbeitung des Signalverbreitungszyklus im Messgerät 101 wird nun ein falscher Wert 301 für das Maximum des Nutzechos 203 bestimmt, woraus ein verhältnismäßig großer Messfehler aufgrund der Abweichung des zugehörigen Frequenzwertes von der eigentlichen Targetfrequenz 204 resultiert.

Um dies zu vermeiden, kann ein sog. Zeropadding zum Einsatz kommen. Dabei werden vor der Berechnung der schnellen Fouriertransformation weitere Abtastwerte mit Amplitudenwert 0 an das eigentliche Beatsignal rechnerisch angefügt. Nach Durchführung der FFT ergeben sich dadurch weitere berechnete Stützstellen der Echokurve 202.

So können beispielsweise bis zu 4096 reale Abtastwerte (oder auch mehr) des Beatsignals erfasst werden. Für die Berechnung von drei weiteren Zwischenwerten müssten somit 3 mal 4096 Nullen an das Signal angefügt werden. Aus der Transformation von 4096 Werten wird so eine Transformation von 16384 Werten, welche einerseits hohe Anforderungen an die Größe des im Füllstandmessgerät enthaltenen Speichers stellt und andererseits auch zu sehr langen Berechnungszeiten und daraus resultierendem hohem Energieverbrauch führen kann.

Bei noch höheren Anforderungen an die Genauigkeit der Echokurve erhöht sich der Aufwand entsprechend stark.

Alternativ zu dem Zeropadding und erfindungsgemäß kann ein Verfahren durchgeführt werden, das die Bestimmung beliebig vieler Stützstellen des Spektrums 202 des Zwischenfrequenzsignals 301 ermöglicht, ohne hierbei die Anforderungen an den dafür notwendigen Speicherplatz über Gebühren zu erhöhen.

Die Anwendung dieses Verfahrens ist insbesondere im Umfeld energieoptimierter Zweileitermessgeräte vorteilhaft.

Fig. 4 zeigt ein im Vergleich zur Fig. 1 modifiziertes Füllstandmessgerät 401. Das Füllstandmessgerät unterscheidet sich von dem Füllstandmessgerät der Fig. 1 durch eine modifizierte Echokurvenerzeugungseinheit 402 und eine modifizierte Vermessungseinheit 403, die über die Datenleitung 404 miteinander verbunden sind.

An dieser Stelle sei angemerkt, dass die unterschiedlichen Signalverarbeitungseinheiten, die das Füllstandmessgerät 401 aufweist, auch in einer einzelnen Einheit integriert sein können.

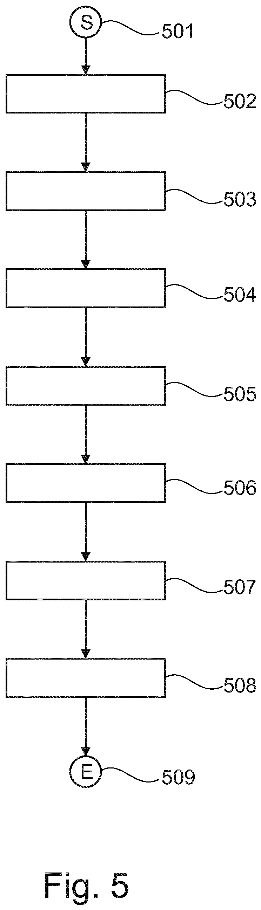

Fig. 5 zeigt beispielhaft einen Ablauf, wie er in einem Füllstandmessgerät 401 gemäß einem Ausführungsbeispiel der Erfindung durchgeführt werden kann.

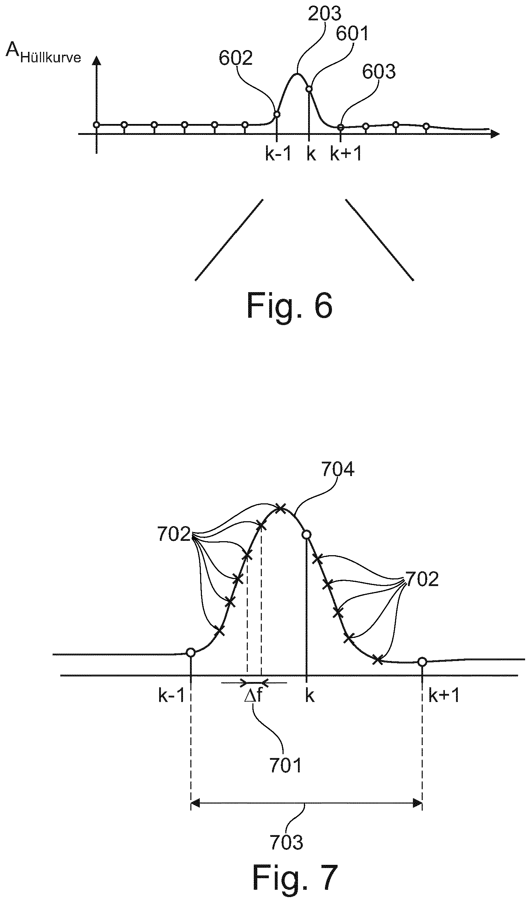

Weiterhin verdeutlichen die Figuren 6 und 7 wichtige Zwischenergebnisse des im Folgenden beschriebenen Verfahrens.

Das Verfahren beginnt im Startzustand 501 (vgl. Fig. 5). Zunächst wird, wie bei einem konventionellen Füllstandmessgerät, in Schritt 502 eine Beatkurve erzeugt, digitalisiert und im Speicher des Füllstandmessgeräts 401 abgelegt.

Im optionalen Schritt 503 wird das digital vorliegende Beatsignal mit einer bekannten Fensterfunktion, z. B. eines Hammingfensters, eines Bartlettfensters oder anderer Fenster, gewichtet. Die Anwendung von Fensterfunktionen kann die Darstellung im Spektralbereich verbessern.

In Schritt 504 wird das Beatsignal von der modifizierten Echokurvenerzeugungseinheit 402 (vgl. Fig. 4) unter Verwendung der schnellen Fouriertransformation in den Spektralbereich umgesetzt. Der Hardwareaufbau des Füllstandmessgeräts 401 mag hierbei dazu in besonderer Art und Weise befähigt sein, beispielsweise durch Verwendung eines digitalen Signalprozessors mit spezieller Hardwareeinheit zur Berechnung einer FFT.

In Schritt 505 wird nach bekannten Verfahren die Lage des zur Füllgutoberfläche korrespondierenden Echos 203 bestimmt. Die Lage des Echos kann beispielsweise durch die Frequenz des betragsmäßig größten Wertes 601 im Spektralbereich definiert sein. In Schritt 506 bestimmt die modifizierte Vermessungseinheit 403 die Frequenzwerte der benachbarten zwei, drei, vier oder mehr Abtastwerte 602, 603 des zuvor identifizierten Abtastwerts 601 mit der größten Amplitude. Es wird davon ausgegangen, dass es sich bei diesen Abtastwerten um die Abtastwerte des Füllgutechos 203 handelt.

Diese Frequenzwerte werden an die modifizierte Echokurvenerzeugungseinheit 402 des Füllstandmessgeräts der Fig. 4 übermittelt, welche dann in einem vorgebbaren Frequenzraster 701 (vgl. Fig. 7) weitere Stützstellen 702 der Echokurve 202 im Bereich des Füllgutechos 203 berechnet und an die modifizierte Vermessungseinheit 403 übermittelt.

Aus diesen weiteren Stützstellen 702 kann dann der Abschnitt 704 der Echokurve innerhalb des definierten Bereiches 703 mit höherer Auflösung berechnet werden.

Das hierzu verwendete Verfahren ist als Discrete Time Fouriertransformation (DTFT) bekannt. Die Ergebnisse dieser Berechnung stimmen mit denen der schnellen Fouriertransformation in Verbindung mit Zeropadding überein, wobei letztere durch das hierzu notwendig werdende Anhängen von Nullen ein Vielfaches an Speicherbedarf benötigt, welcher speziell bei kommerziell verfügbaren, energieoptimierten digitalen Signalprozessorlösungen stark begrenzt sein kann.

In Schritt 507 bestimmt die Vermessungseinheit 403 nach bekannten Verfahren unter Verwendung der zusätzlich errechneten Stützstellen 702 die Entfernung 112 zur Füllgutoberfläche (vgl. Fig. 4) 105. Nach Ausgabe des Messwertes 508 endet das Verfahren.

Ergänzend sei daraufhingewiesen, dass "umfassend" und "aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Verfahren zum Bestimmen einer Echokurve durch ein nach einem Entfernungsmessverfahren arbeitendes Füllstandmessgerät, welches im Rahmen der Füllstandbestimmung eine Spektralanalyse des von ihm empfangenen Messsignals durchführt, das Verfahren aufweisend die Schritte:
Erfassen eines Messsignals, bei dem es sich um ein von dem Füllstandmessgerät ausgesendeten und zumindest an der Oberfläche eines Mediums reflektierten Sendesignals handelt;
Umsetzen des erfassten Sendesignals in ein Zwischenfrequenzsignal;
Abtasten des Zwischenfrequenzsignals zu diskreten Zeitpunkten;
Überführen der durch das Abtasten erhaltenen Abtastwerte vom Zeitbereich in den Frequenzbereich;
Berechnen einer Echokurve aus den in den Frequenzbereich überführten Abtastwerten in einer ersten Auflösung unter Verwendung einer schnellen Fouriertransformation (FFT);
Berechnen eines Abschnitts der Echokurve innerhalb eines definierten Bereiches der Echokurve in einer zweiten Auflösung, die höher ist als die erste Auflösung, unter Verwendung einer diskreten Fouriertransformation (DTFT).

2. Verfahren nach Anspruch 1,
wobei das Sendesignal ein frequenzmoduliertes, elektromagnetisches oder optisches Signal ist.

3. Verfahren nach Anspruch 1 oder 2,
wobei das Füllstandmessgerät nach dem FMCW-Prinzip arbeitet.

4. Verfahren nach einem der vorhergehenden Ansprüche,
wobei das Berechnen des Abschnitts der Echokurve durch Berechnen weiterer Stützstellen der Echokurve in dem definierten Bereich erfolgt.

5. Verfahren nach Anspruch 4,
wobei die weiteren Stützstellen jeweils einen vorgegebenen Frequenzabstand Δf zu den ihnen benachbarten Stützstellen aufweisen.

6. Verfahren nach einem der vorhergehenden Ansprüche,
wobei der definierte Bereich der Echokurve der Lage eines zu der Oberfläche des Mediums korrespondierenden Echos entspricht.

7. Verfahren nach einem der vorhergehenden Ansprüche,
wobei der definierte Bereich genau drei Abtastwerte aufweist; und
wobei der mittlere der drei Abtastwerte eine größere Amplitude aufweist, als die beiden anderen Abtastwerte.

8. Hochauflösendes Füllstandmessgerät (401), das nach einem Entfernungsmessverfahren arbeitet, welches im Rahmen der Füllstandbestimmung eine Spektralanalyse des von ihm empfangenen Messsignals durchführt, aufweisend:
eine Antenne (102) zum Erfassen eines Messsignals, bei dem es sich um ein von dem Füllstandmessgerät ausgesendeten und zumindest an der Oberfläche (105) eines Mediums (106) reflektierten Sendesignals (114) handelt;
eine Hochfrequenzeinheit (103) zum Umsetzen des erfassten Sendesignals in ein Zwischenfrequenzsignal (201);
eine Abtasteinheit (107) zum Abtasten des Zwischenfrequenzsignals zu diskreten Zeitpunkten (302, 303, 304);
eine Echokurvenerzeugungseinheit (402) zum:
Überführen der durch das Abtasten erhaltenen Abtastwerte (305, 306, 307) vom Zeitbereich in den Frequenzbereich;
Berechnen einer Echokurve (203) aus den in den Frequenzbereich überführten Abtastwerten in einer ersten Auflösung unter Verwendung einer schnellen Fouriertransformation;
Berechnen eines Abschnitts (704) der Echokurve innerhalb eines definierten Bereiches (703) der Echokurve in einer zweiten Auflösung, die höher ist als die erste Auflösung, unter Verwendung einer diskreten Fouriertransformation.

9. Hochauflösendes Füllstandmessgerät (401) nach Anspruch 8, ausgeführt zum Durchführen eines Verfahrens nach einem der Ansprüche 2 bis 7.

10. Programmelement, das, wenn es auf dem Prozessor eines Füllstandmessgerätes ausgeführt wird, den Prozessor veranlasst, ein Verfahren nach einem der Ansprüche 1 bis 7 durchzuführen.

11. Computerlesbares Medium, auf dem ein Programmelement nach Anspruch 10 gespeichert ist.

## Claims

1. Method for determining an echo curve using a fill level measurement device which operates according to a distance measurement method and carries out a spectral analysis of the measurement signal, which has been received by the fill level measurement device during the fill level determination, the method comprising the steps of:
detecting a measurement signal, which is a transmission signal transmitted by the fill level measurement device and reflected at least at the surface of a medium;
converting the detected transmission signal into an intermediate frequency signal;
sampling the intermediate frequency signal at discrete times;
transforming the sampling values, obtained by the sampling, from the time range into the frequency range;
calculating an echo curve from the sampling values, which are transformed into the frequency range, in a first resolution by means of a fast Fourier transform (FFT);
calculating a portion of the echo curve within a defined region of the echo curve in a second resolution, which is higher than the first resolution, by means of a discrete Fourier transform (DTFT).

2. Method according to claim 1,
wherein the transmission signal is a frequency-modulated signal, an electromagnetic signal or an optical signal.

3. Method according to either claim 1 or claim 2,
wherein the fill level measurement device operates according to the FMCW principle.

4. Method according to any of the preceding claims,
wherein calculating the portion of the echo curve is performed by calculating further sampling points of the echo curve in the defined range.

5. Method according to claim 4,
wherein the further sampling points comprise each a predetermined frequency spacing Δf from the sampling points adjacent thereto.

6. Method according to any of the preceding claims,
wherein the defined region of the echo curve corresponds to the location of an echo corresponding to the surface of the medium.

7. Method according to any of the preceding claims,
wherein the defined region has exactly three sampling values; and
wherein the middle value of the three sampling values has a greater amplitude than the two other sampling values.

8. High-resolution fill level measurement device (401) which operates according to a distance measurement method and carries out a spectral analysis of the measurement signal, which has been received by the fill level measurement device during the fill level determination, comprising:
an antenna (102) configured to detect a measurement signal, which is a transmission signal (114) transmitted by the fill level measurement device and reflected at least at the surface (105) of a medium (106);
a high-frequency unit (103) configured to convert the detected transmission signal into an intermediate frequency signal (201);
a sampling unit (107) configured to sample the intermediate frequency signal at discrete times (302, 303, 304);
an echo curve generation unit (402) configured to:
transform the sampling values (305, 306, 307), obtained by the sampling, from the time range into the frequency range;
calculate an echo curve (203) from the sampling values, which are transformed into the frequency range, in a first resolution by means of a fast Fourier transform;
calculate a portion (704) of the echo curve within a defined region (703) of the echo curve in a second resolution, which is higher than the first resolution, by means of a discrete Fourier transform.

9. High-resolution fill level measurement device (401) according to claim 8, designed to carry out a method according to any of claims 2 to 7.

10. Program element which, when executed on the processor of a fill level measurement device, causes the processor to carry out a method according to any of claims 1 to 7.

11. Computer-readable medium on which a program element according to claim 10 is stored.

## Revendications

1. Procédé de détermination d'une courbe d'écho par un appareil de mesure de remplissage travaillant selon un procédé de mesure télémétrique, lequel effectue une analyse spectrale du signal de mesure reçu par celui-ci dans le cadre de la détermination du remplissage, le procédé comportant les étapes :
saisie d'un signal de mesure, s'agissant d'un signal d'émission émis depuis l'appareil de mesure de remplissage et au moins réfléchi sur la surface d'un milieu ;
conversion du signal émis saisi en un signal de fréquence intermédiaire ;
échantillonnage du signal de fréquence intermédiaire à des instants discrets ;
passage des valeurs échantillonnées obtenues par l'échantillonnage du domaine temporel au domaine fréquentiel ;
calcul d'une courbe d'écho à partir des valeurs échantillonnées passées dans le domaine fréquentiel dans une première résolution faisant appel à une transformée de Fourier rapide (FFT) ;
calcul d'une section de la courbe d'écho à l'intérieur d'un domaine défini de la courbe d'écho dans une deuxième résolution, laquelle est plus élevée que la première résolution, faisant appel à une transformée de Fourier discrète (DTFT) ;

2. Procédé selon la revendication 1, dans lequel le signal émis est un signal modulé en fréquence, optique ou électromagnétique.

3. Procédé selon la revendication 1 ou 2, dans lequel l'appareil de mesure de remplissage travaille selon le principe d'onde entretenue à modulation de fréquence (FMCW).

4. Procédé selon l'une des revendications précédentes, dans lequel le calcul de la section de la courbe d'écho s'effectue par calcul de points de grille supplémentaires de la courbe d'écho dans le domaine défini.

5. Procédé selon la revendication 4, dans lequel les points de grille supplémentaires présentent respectivement un écart de fréquence Af prédéfini par rapport aux points de grille voisins.

6. Procédé selon l'une des revendications précédentes, dans lequel le domaine défini de la courbe d'écho correspond à la position d'un écho correspondant à la surface du milieu.

7. Procédé selon l'une des revendications précédentes, dans lequel le domaine défini comporte exactement trois valeurs échantillonnées ; et dans lequel, parmi les trois valeurs échantillonnées, celle du milieu présente une amplitude plus élevée que celle des deux autres.

8. Appareil de mesure de remplissage à haute résolution (401), travaillant selon un procédé de mesure télémétrique, lequel effectue une analyse spectrale du signal de mesure reçu par celui-ci dans le cadre de la détermination du remplissage, comportant :
une antenne (102) destinée à la saisie d'un signal de mesure, s'agissant d'un signal d'émission (114) émis depuis l'appareil de mesure de remplissage et au moins réfléchi sur la surface (105) d'un milieu (106) ;
une unité haute fréquence (103) destinée à la conversion du signal émis saisi en un signal de fréquence intermédiaire (201) ;
une unité d'échantillonnage (107) destinée à l'échantillonnage du signal de fréquence intermédiaire à des instants discrets (302, 303, 304) ;
une unité de création de courbe d'écho (402) destinée :
au passage des valeurs échantillonnées (305, 306, 307) obtenues par l'échantillonnage du domaine temporel au domaine fréquentiel ;
au calcul d'une courbe d'écho (203) à partir des valeurs échantillonnées passées dans le domaine fréquentiel dans une première résolution faisant appel à une transformée de Fourier rapide ;
au calcul d'une section (704) de la courbe d'écho à l'intérieur d'un domaine défini (703) de la courbe d'écho dans une deuxième résolution, laquelle est plus élevée que la première résolution, faisant appel à une transformée de Fourier discrète.

9. Appareil de mesure de remplissage à haute résolution (401) selon la revendication 8, réalisé pour mettre en oeuvre un procédé selon l'une des revendications 2 à 7.

10. Élément de programme qui, lorsqu'il est réalisé sur le processeur d'un appareil de mesure de remplissage, permet au processeur de mettre en oeuvre un procédé selon l'une des revendications 1 à 7.

11. Support lisible par ordinateur sur lequel est enregistré un élément de programme selon la revendication 10.
